# EUROPÄISCHE PATENTSCHRIFT

(11) **EP 1 527 103 B1**
(45) Veröffentlichungstag und Bekanntmachung des Hinweises auf die Patenterteilung: **05.01.2011**
(21) Anmeldenummer: 03766179.0
(22) Anmeldetag: 16.07.2003
(51) Int. Cl.: C08F 2/24, C08F 2/22, C08F 10/00

(54) **VERFAHREN ZUR EMULSIONSPOLYMERISATION VON OLEFINEN**
METHOD FOR THE EMULSION POLYMERIZATION OF OLEFINS
PROCEDE DE POLYMERISATION EN EMULSION D'OLEFINES

(30) Priorität: 25.07.2002 DE 10234005
(43) Veröffentlichungstag der Anmeldung: 04.05.2005
(73) Patentinhaber: BASF SE, 67056 Ludwigshafen (DE)
(72) Erfinder: CHOWDHRY, Mubarik, Mahmood, F-67000 Strasbourg (FR); SCHMID, Markus, 67146 Deidesheim (DE); PREISHUBER-PFLÜGL, Peter, 67061 Ludwigshafen (DE); SAVA, Xavier, 68161 Mannheim (DE); WEISS, Horst, 67141 Neuhofen (DE); MECKING, Stefan, 78464 Konstanz (DE); BAUERS, Florian, M., 79104 Freiburg (DE)
(86) Internationale Anmeldenummer: PCT/EP2003/007683
(87) Internationale Veröffentlichungsnummer: WO 2004/013185

(56) Entgegenhaltungen:
- EP-A- 0 137 389
- WO-A-01/44325
- WO-A-03/006528
- DE-A- 2 923 206
- DE-A- 3 345 785
- DE-A- 3 445 090
- BAUERS, FLORIAN M. ET AL: "Catalytic polymerization of ethylene in aqueous emulsion with a simple in situ catalyst" MACROMOLECULES (2003), 36(18), 6711-6715 , XP002259050
- TEYSSIE, PHILIPPE ET AL: "Polymerization by transition metal derivatives. III. Competitive effect of various ligands on stereospecific polymerization of butadiene by rhodium salts in aqueous emulsion" BULLETIN DE LA SOCIETE CHIMIQUE DE FRANCE (1965), (10), 2842-8 , XP009019751
- BERGER, RICHARD S. ET AL: "Emulsion polymerization of vinyl monomers by transition metal compounds" JOURNAL OF POLYMER SCIENCE (1964), PT. A 2(1), 357-65 , XP009019752

## Beschreibung

Die vorliegende Erfindung betrifft ein Verfahren zur Emulsionspolymerisation von einem oder mehreren Olefinen durch Umsetzung eines Liganden der allgemeinen Formeln Ia oder Ib oder eines Gemisches von mindestens zwei der Liganden Ia oder Ib 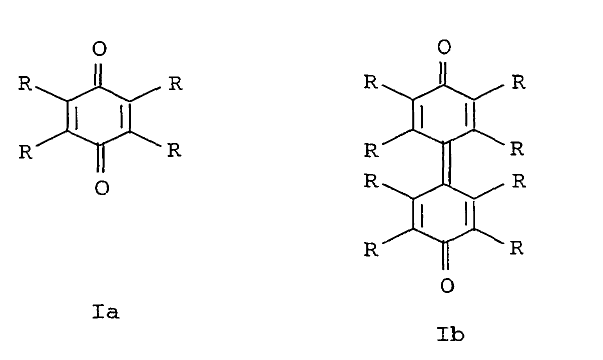 wobei R jeweils einen oder mehrere der nachstehenden Reste bedeuten:
Wasserstoff
Halogen
Nitril
C₁-C₁₂-Alkylgruppen, C₁-C₁₂-Alkoxygruppen, C₇-C₁₃-Aralkylgruppen, C₆-C₁₄-Arylgruppen, unsubstituiert oder substituiert durch: C₁-C₁₂-Alkylgruppen, Halogene, C₁-C₁₂-Alkoxygruppen, C₃-C₁₂-Cycloalkylgruppen, C₁-C₁₂-Thioethergruppen, gegebenenfalls auch in Form ihrer Salze vorliegende Carboxylgruppen oder Sulfongruppen, sowie Aminogruppen mit Wasserstoff und/oder C₁-C₁₂-Alkylresten
Aminogruppen NR¹R², wobei R¹ und R² gemeinsam oder getrennt stehen für Wasserstoff, C₁-C₁₂-Alkylgruppen, C₇-C₁₃-Aralkylreste und C₆-C₁₄-Arylgruppen und zusätzlich auch einen gesättigten oder ungesättigten 5- bis 10-gliedrigen Ring bilden können, unsubstituiert oder substituiert durch: C₁-C₁₂-Alkylgruppen, Halogene, C₁-C₁₂-Alkoxygruppen, C₃-C₁₂-Cycloalkylgruppen, C₁-C₁₂-Thioethergruppen, gegebenenfalls auch in Form ihrer Salze vorliegende Carboxylgruppen oder Sulfongruppen, sowie Aminogruppen mit Wasserstoff und/oder C₁-C₁₂-Alkylresten und wobei gleiche oder verschiedene Verbindungen der allgemeinen Formeln Ia und Ib gegebenenfalls auch durch eine oder mehrere C₁-C₁₂-Alkylenbrücken, C₂-C₁₂ alkylierte Azobrücken oder Brücken der allgemeinen Formel II 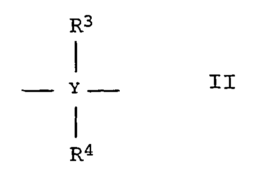 mit Y gleich Silicium oder Germanium und R³, R⁴ gleich Wasserstoff und/oder C₁-C₁₂-Alkyl,
verbrückt sein können,
mit einer Phosphinverbindung PR₃', wobei R' Wasserstoff, C₁-C₁₂-Alkylgruppen, C₄-C₁₂-Cycloalkylgruppen, C₇-C₁₅-Aralkylgruppen oder C₆-C₁₅-Arylgruppen bedeutet
oder mit einer Diphosphinverbindung R₂'P-G-PR₂', wobei R' die gleiche Bedeutung hat wie bei den Phosphinverbindungen PR₃' und G für C₁-C₁₂-Alkylgruppen, C₄-C₁₂-Cycloalkylgruppen, C₇-C₁₅-Aralkylgruppen oder C₆-C₁₅-Arylgruppen steht,
sowie mit einer Metallverbindung der allgemeinen Formel M(L²)₂ oder M(L²)₂(L¹)_{z},
wobei die Variablen wie folgt definiert sind:
- M: ein Übergangsmetall der Gruppen 7 bis 10 des Periodensystems der Elemente;
- L¹: Phosphane (R⁵)ₓPH₃₋ₓ oder Amine (R⁵)ₓNH₃₋ₓ mit gleichen oder verschiedenen Resten R⁵, Ether (R⁵)₂O, H₂O, Alkoholen (R⁵)OH, Pyridin, Pyridinderivate der Formel C₅H₅₋ₓ(R⁵)ₓN, CO, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
- R⁵: Wasserstoff, C₁-C₂₀-Alkylgruppen, die ihrerseits mit O(C₁-C₆-Alkyl) oder N(C₁-C₆-Alkyl)₂-Gruppen substituiert sein können, C₃-C₁₂-Cycloalkylgruppen, C₇-C₁₃-Aralkylresten und C₆-C₁₄-Arylgruppen,
- L²: Halogenidionen R⁶ₓNH₃₋ₓ, wobei x eine ganze Zahl von 0 bis 3 und R⁶C₁-C₁₂-Alkyl bedeutet, und weiterhin C₁-C₆-Alkylanionen, Allylanionen, Benzylanionen oder Arylanionen, wobei L¹ und L² miteinander durch eine oder mehrere kovalente Bindungen ver- knüpft sein können,
- z: eine Zahl von 0 bis 4,
und sofortigem Einsatz des Umsetzungsproduktes zur Polymerisation oder Copolymerisation von Olefinen in Wasser oder in einem Lösemittelgemisch, das mindestens 50 Vol.-% Wasser enthält, in Anwesenheit eines Emulgators und optional in Gegenwart eines Aktivators.

Auf eine Isolierung und Reinigung des in situ gebildeten Komplexes wird verzichtet.

Für das erfindungsgemäße Verfahren wird optional ein Aktivator wie beispielsweise Olefinkomplexe des Rhodiums oder Nickels eingesetzt.

Wässrige Dispersionen von Polymeren werden in zahlreichen sehr unterschiedlichen Anwendungen kommerziell verwertet. Zunennen sind beispielsweise Papieranwendungen (Streicherei und Oberflächenleimung), Rohstoffe für Anstrich und Lacke, Klebrohstoffe (u.a. Haftklebstoffe), Textil- und Lederapplikationen, in der Bauchemie, Formschäume (Matratzen, Teppichrückenbeschichtungen) sowie für medizinische und pharmazeutische Produkte, beispielsweise als Bindemittel für Präparate. Eine Zusammenfassung findet sich in D. Distler (Herausgeber) "Wäßrige Polymerdispersionen", Wiley-VCH Verlag, 1. Auflage, 1999.

Bisher war es schwierig, wässrige Dispersionen von Polyolefinen herzustellen. Es wäre aber wünschenswert, derartige wässrige Dispersionen von Polyolefinen bereitstellen zu können, weil die Monomere wie Ethylen oder Propylen unter wirtschaftlichen Aspekten sehr vorteilhaft sind.

Die gängigen Verfahren zur Herstellung derartiger wässriger Dispersionen aus den entsprechenden Olefinen bedienen sich entweder der radikalischen Hochdruckpolymerisation oder aber der Herstellung von Sekundärdispersionen. Diese Verfahren sind mit Nachteilen behaftet. Die radikalischen Polymerisationsverfahren erfordern extrem hohe Drücke, sie sind in technischem Maßstab auf Ethylen und Ethylencopolymerisate beschränkt, und die erforderlichen Apparaturen sind sehr teuer in Anschaffung und Wartung. Eine andere Möglichkeit besteht darin, zunächst Ethylen in einem beliebigen Verfahren zu polymerisieren und anschließend eine Sekundärdispersion herzustellen, wie in US-A 5,574,091 beschrieben. Diese Methode ist ein Mehrstufenverfahren und somit sehr aufwendig.

Es ist deshalb wünschenswert, 1-Olefine wie Ethylen oder Propylen unter den Bedingungen der Emulsionspolymerisation zu polymerisieren und die geforderte Dispersion in einem Schritt aus dem entsprechenden Monomer herzustellen. Außerdem haben Emulsionspolymerisationsverfahren ganz allgemein den Vorteil, dass sie Polymere mit hohen Molmassen liefern, wobei die Wärmeabfuhr verfahrensbedingt gut im Griff ist. Schließlich sind Reaktionen in wässrigen Systemen ganz allgemein deshalb interessant, weil Wasser ein billiges und umweltfreundliches Lösemittel ist.

Bisher vorgestellte Verfahren für die Emulsionspolymerisation von 1-Olefinen wie Ethylen oder Propylen sind noch zu verbessern. Das Problem liegt im Allgemeinen im für die Polymerisation dieser Monomeren erforderlichen Katalysator.

Mit elektrophilen Übergangsmetallverbindungen wie TiCl₄ (Ziegler-Natta-Katalysator) oder Metallocenen lassen sich Olefine polymerisieren, wie beispielsweise von H.-H. Brintzinger et al. in Angew. Chem., Int. Ed. Engl. 1995, 34, 1143 beschrieben wird. Jedoch sind sowohl TiCl₄ als auch Metallocene feuchtigkeitsempfindlich und eignen sich daher wenig zur Herstellung von Polyolefinen in der Emulsionspolymerisation. Auch die als Cokatalysatoren verwendeten Aluminiumalkyle sind feuchtigkeitsempfindlich, so dass Wasser als Katalysatorgift sorgfältig ausgeschlossen werden muss.

Es gibt nur wenig Berichte über Übergangsmetall-katalysierte Reaktionen von Ethylen in wässrigem Milieu. So berichten L. Wang et al. in J. Am. Chem. Soc. 1993, 115, 6999 über eine Rhodiumkatalysierte Polymerisation. Die Aktivität ist mit rund einer Insertion/Stunde für technische Anwendungen jedoch viel zu gering.

Die Umsetzung von Ethylen mit Nickel-P,O-Chelatkomplexen erscheint wesentlich vielversprechender, wie sie in den US-Schriften US-A 3,635,937 und US-A 3,686,159 beschrieben wird. Über die polymeranalytischen Daten wird nichts berichtet. Auch ist die berichtete Aktivität für technische Anwendungen immer noch zu gering.

In EP-A 0 046 331 und EP-A 0 046 328 wird über die Umsetzung von Ethylen mit Ni-Chelat-Komplexen der allgemeinen Formel A berichtet 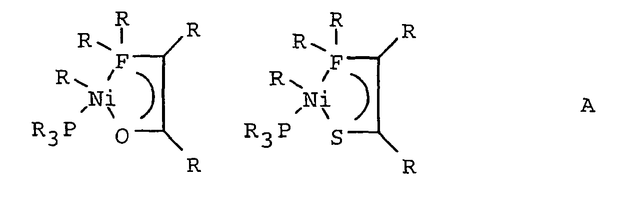 wobei unter R gleiche oder verschiedene organische Substituenten verstanden werden, von denen einer eine Sulfonylgruppe trägt, und F Phosphor, Arsen oder Stickstoff bedeutet. Unter den gewählten Reaktionsbedingungen in Lösemitteln wie Methanol oder Gemischen aus Methanol und einem Kohlenwasserstoff wurden nur Oligomere erhalten, die für die oben genannten Anwendungen ungeeignet sind.

In US-A 4,698,403 (Spalte 7, Zeile 13-18) und in US-A 4,716,205 (Spalte 6, Zeile 59-64) wird gezeigt, dass ein Überschuss an Wasser gegenüber zweizähnigen Ni-Chelatkomplexen als Katalysatorgift wirkt, auch wenn sie eine SO₃⁻-Gruppe tragen.

Aus den oben zitierten Dokumenten ist ersichtlich, dass zahlreiche Ni-Komplexe in der Gegenwart von Wasser nicht polymerisationsaktiv sind.

Andererseits ist aus WO 97/17380 bekannt, dass Palladium-Verbindungen der Formel B, 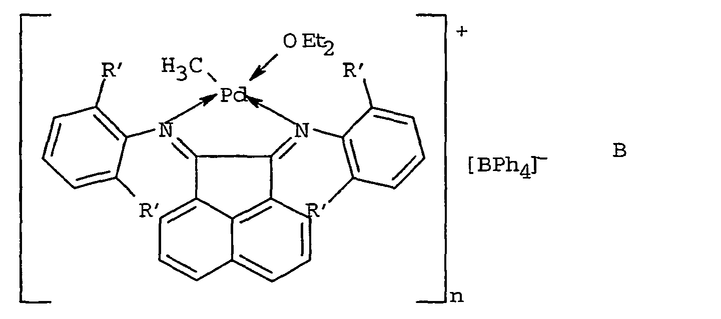 Et = C₂H₅, Ph = Phenyl in denen R' beispielsweise für Isopropylgruppen steht, oder die analogen Nickelverbindungen höhere Olefine wie 1-Octen in wässriger Umgebung polymerisieren können. Optional kann ein Emulgator hinzugefügt werden, um die Polymerisation zu erleichtern. Allerdings wird darauf hingewiesen, dass die Temperatur von 40°C nicht überschritten werden sollte, weil andernfalls der Katalysator deaktiviert wird (S. 25, Zeile 5 ff). Höhere Reaktionstemperaturen sind aber im Allgemeinen wünschenswert, weil dadurch die Aktivität eines Katalysatorsystems erhöht werden kann.
Nachteilig an Katalysatorsystemen der allgemeinen Formel B ist weiterhin, dass mit Ethylen im Allgemeinen hochverzweigte Polymerisate gebildet werden (L.K. Johnson J. Am. Chem. Soc. 1995, 117, 6414), die bisher technisch weniger von Bedeutung sind, und mit höheren α-Olefinen sogenanntes "chain running" der aktiven Komplexe beobachtet werden muss. Das "chain running" führt zu einer großen Anzahl von 1,ω-Fehlinsertionen, und dadurch werden im Allgemeinen amorphe Polymerisate erzeugt, die sich nur wenig als Werkstoffe eignen.

Weiterhin ist bekannt, dass Komplexe der allgemeinen Formel C 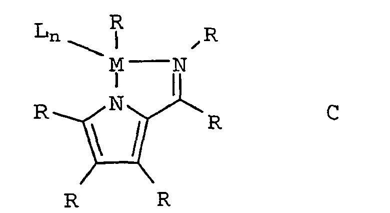 (WO 98/42665) mit M = Ni oder Pd und n Neutralliganden L in Anwesenheit geringer Mengen von Wasser polymerisationsaktiv sind, ohne das die katalytische Aktivität Einbußen erleidet (S. 16, Zeile 13). Diese Wassermengen dürfen jedoch 100 Äquivalente, bezogen auf den Komplex, nicht überschreiten (Seite 16, Zeile 30-31). Unter diesen Bedingungen kann jedoch keine Emulsionspolymerisation durchgeführt werden.

Darüber hinaus wird offenbart, dass auch Komplexe der allgemeinen Formel D 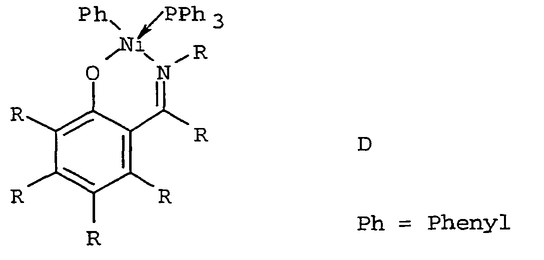 mit gleichen oder verschiedenen Resten R in der Lage sind, in Anwesenheit von geringen Mengen Wasser Ethylen zu polymerisieren (WO 98/42664, insbesondere Seite 17, Zeile 14 ff). Diese Wassermengen dürfen jedoch 100 Äquivalente, bezogen auf den Komplex, nicht überschreiten (Seite 17, Zeile 33-35). Unter diesen Bedingungen kann jedoch keine Emulsionspolymerisation durchgeführt werden.

Die Herstellung von wässrigen Dispersionen mit Hilfe von Übergangsmetallkatalysatoren wird auch in den EP-A 1110977 und wo 01/44325 beschrieben.

Weiterhin werden in den beiden Offenlegungsschriften DE-A 2923206 und DE-A 3345785 jeweils verfahren zur Herstellung von Polyethylen beschrieben, wobei sogenannte in situ-Katalysatoren bestehend aus einer Nickelverbindung und einem Gemisch aus einer chinoiden Verbindung sowie einen tert. Phosphin eingesetzt werden. Aus beiden Schriften ist aber nicht bekannt, dass damit auch wässrige Dispersionen hergestellt werden können, welche Polyethylen enthalten.

Aufgrund der großen kommerziellen Bedeutung von Polyolefinen ist die Suche nach verbesserten Verfahren zur Polymerisation auch weiterhin von großer Bedeutung.

Es bestand deshalb die Aufgabe, ein verbessertes Verfahren bereitzustellen, welches
- Olefine in Anwesenheit von großen Mengen Wasser zu Polyolefinen polymerisiert,
- dabei möglichst wenig verzweigte Werkstoffe mit hohen Molekulargewichten liefert, und
- erlaubt, diese Reaktion unter technisch vernünftigen Bedingungen durchzuführen.

Es wurde nun gefunden, dass diese Aufgabe durch das eingangs definierte Verfahren gelöst wird.

Als geeignete Olefine zur Polymerisation seien genannt: Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, para-Methylstyrol und para-Vinylpyridin, wobei Ethylen und Propylen bevorzugt sind. Besonders bevorzugt ist Ethylen.

Auch die Copolymerisation zweier Olefine gelingt mit dem erfindungsgemäßen Verfahren, wobei das Comonomer aus folgenden Gruppen gewählt werden kann:
- 1-Olefine wie Ethylen, Propylen, 1-Buten, 1-Penten, 1-Hexen, 1-Hepten, 1-Octen, 1-Decen und 1-Eicosen, aber auch verzweigte Olefine wie 4-Methyl-1-Penten, Vinylcyclohexen und Vinylcyclohexan sowie Styrol, para-Methylstyrol und para-Vinylpyridin, wobei Propylen, 1-Buten, 1-Penten, 1-Hexen, 1-Hepten, 1-Octen, 1-Decen bevorzugt sind;
- interne Olefine wie Norbornen, Norbornadien oder cis- oder trans-2-Buten;
- polare Monomere wie Acrylsäure, Acrylsäure-C₁-C₈-alkylester, 2-Hydroxyethylacrylat, 3-Hydroxypropylacrylat, 4-Hydroxybutylacrylat, Methacrylsäure, Methacrylsäure-C₁-C₈-alkylester, C₁-C₆-Alkyl-Vinylether und Vinylacetat; bevorzugt sind Acrylsäure, Acrylsäuremethylester, Acrylsäureethylester, Acrylsäure-n-butylester, 2-Ethylhexylacrylat, 2-Hydroxyethylacrylat, Methylmethacrylat, Ethylmethacrylat, n-Butylmethacrylat, Ethylvinylether und Vinylacetat.

Dabei lässt sich das Verhältnis der beiden Monomere frei wählen. Bevorzugt ist aber, dass das Comonomer in Anteilen von 0,1 bis 20 mol-%, bezogen auf das Hauptmonomer, eingesetzt wird.
In den Liganden der allgemeinen Formel I a und I b sind die Reste wie folgt definiert:
R ist ausgewählt aus jeweils einen oder mehrere der nachstehenden Reste:
   - Wasserstoff
   - Halogenen, d.h. Atome von Fluor, Chlor, Brom, Jod, wobei Fluor, Chlor und Brom bevorzugt sind
   - Nitril
   - C₁-C₁₂-Alkylgruppen wie Methyl, Ethyl, n-Propyl, iso-Propyl, n-Butyl, iso-Butyl, sec.-Butyl, tert.-Butyl, n-Pentyl, iso-Pentyl. sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl.
   - C₁-C₁₂-Alkoxygruppen wie die für C₁-C₁₂-Alkylgruppen aufgeführten Beispiele, jeweils noch versehen mit einem Sauerstoffatom am Ende der Gruppe (zum Beispiel Methoxy, Ethoxy, n-Propyloxy, iso-Propyloxy, n-Butyloxy)
   - C₇-C₁₃-Aralkylgruppen wie zum Beispiel C₇- bis C₁₂-Phenylalkyl wie Benzyl, 1-Phenethyl, 2-Phenethyl, 1-Phenyl-propyl, 2-Phenyl-propyl, 3-Phenyl-propyl, Neophyl (1-Methyl-1-phenylethyl), 1-Phenyl-butyl, 2-Phenyl-butyl, 3-Phenyl-butyl und 4-Phenyl-butyl, besonders bevorzugt Benzyl;
   - C₆-C₁₄-Arylgruppen wie zum Beispiel Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
   - Aminogruppen NR¹R², wobei R¹ und R² gemeinsam oder getrennt stehen für Wasserstoff, C₁-C₁₂-Alkylgruppen, C₇-C₁₃-Alkylreste und C₆-C₁₄-Arylgruppen (jeweils wie obenstehend definiert) und zusätzlich auch einen gesättigten oder ungesättigten 5- bis 10-gliedrigen Ring bilden können, bevorzugt sind dabei die Dimethylamino-, die Diethylamino-, die Diisopropylamino-, die Methylphenylaminogruppe und die Dimethylaminogruppe. Beispiele für Aminogruppen mit gesättigten Ringen sind die N-Piperidylgruppe und die N-Pyrrolidinylgruppe; Beispiele für Aminogruppen mit ungesättigten Ringen sind N-Pyrrylgruppe, die N-Indolylgruppe und die N-Carbazolylgruppe.

Die vorstehend genannten Reste C₁-C₁₂-Alkylgruppen, C₁-C₁₂-Alkoxygruppen, C₇-C₁₃-Aralkylgruppen, C₆-C₁₄-Arylgruppen und Aminogruppen NR¹R² können am chinoiden Grundgerüst der Formeln Ia und Ib jeweils unsubstituiert vorliegen. Sie können auch selbst zusätzlich noch einen oder auch mehrere der nachfolgenden Substituenten am eigenen Molekulargerüst aufweisen:
- Halogene
- C₁-C₁₂-Alkylgruppen, C₁-C₁₂-Alkoxygruppen, Aminogruppen mit Wasserstoff und/oder C₁-C₁₂-Alkylgruppen wie jeweils vorstehend definiert;
- C₃-C₁₂-Cycloalkylgruppen wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
- C₁-C₁₂-Thioethergruppen wie Methylmercaptyl, Ethylmercaptyl, n-Propylmercaptyl, iso-Propylmercaptyl, n-Butylmercaptyl, iso-Butylmercaptyl, tert.-Butylmercaptyl, n-Pentylmercaptyl, iso-Pentylmercaptyl, Neopentylmercaptyl, n-Hexylmercaptyl;
- Carboxylgruppen gegebenenfalls auch in Form ihrer Salze, vorzugsweise ihrer Alkalisalze, insbesondere in Form ihrer Lithium-, Natrium- oder Kaliumsalze sowie ihrer Ammoniumsalze
- Sulfongruppen wie gegebenenfalls auch in Form ihrer Salze, vorzugsweise ihrer Alkalisalze, insbesondere in Form ihrer Lithium-, Natrium- oder Kaliumsalze sowie ihrer Ammoniumsalze.

Weiterhin können auch solche Verbindungen der allgemeinen Formeln Ia und Ib eingesetzt werden, die durch einen oder mehrere C₁-C₁₂-Alkylenbrücken, insbesondere durch einen oder mehrere C₂-C₁₀-Alkylenbrücken, besonders bevorzugt durch einen oder mehrere C₃-C₈-Alkylenbrücken, durch einen oder mehrere C₂-C₁₂-alkylierte Azobrücken, insbesondere durch einen oder mehrere C₄-C₁₀-alkylierte Azobrücken miteinander verbrückt sind.

Darüber hinaus können gleiche oder verschiedene Verbindungen der allgemeinen Formeln Ia und Ib auch durch Brücken der allgemeinen Formel II 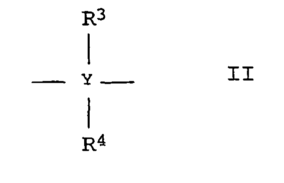 mit Y gleich Silicium oder Germanium und R³ und R⁴ gleich Wasserstoff und/oder C₁-C₁₂-Alkyl verbrückt sein. Vorzugsweise setzt man hierfür Brücken auf Siliciumbasis ein.

Ausgewählte Liganden der allgemeinen Formel Ia, welche sich ganz besonders gut eignen, sind nachstehend als Formeln Ia₁ bis Ia₁₇ abgebildet:

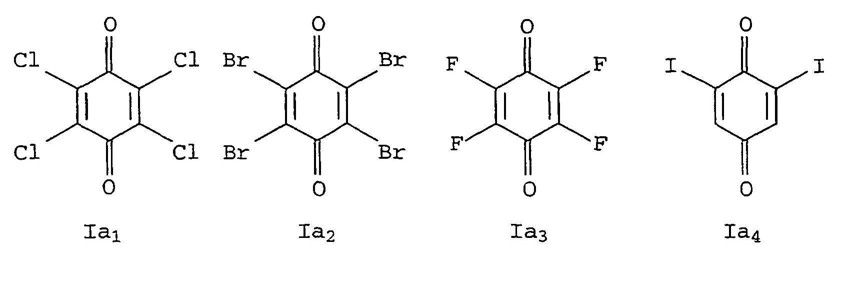

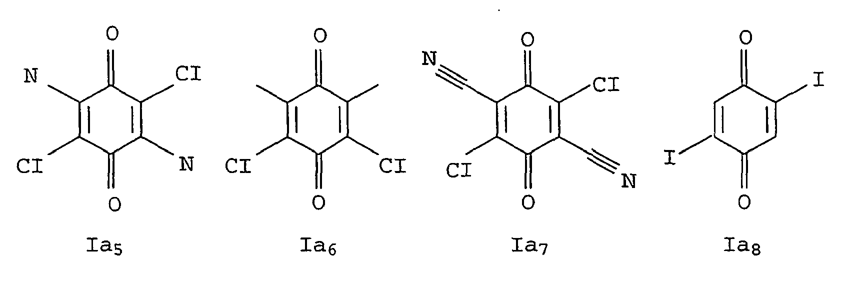

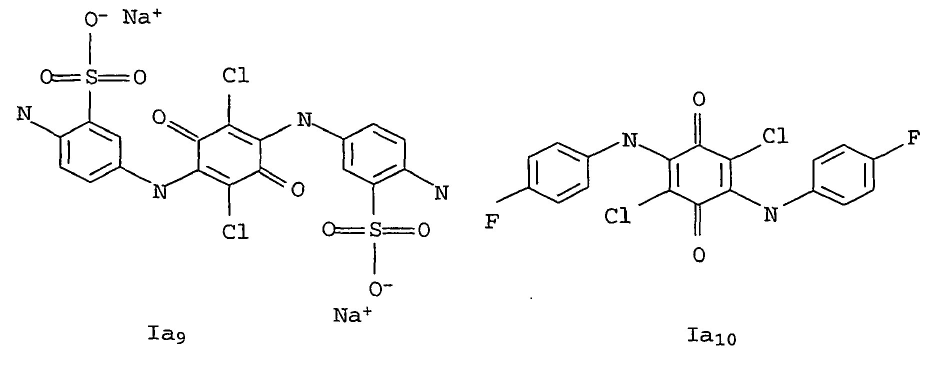

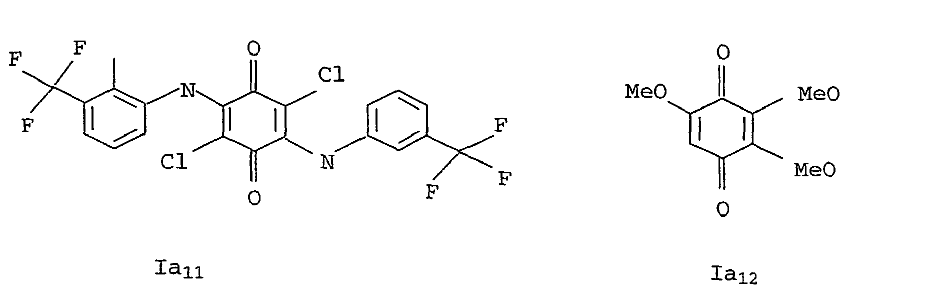

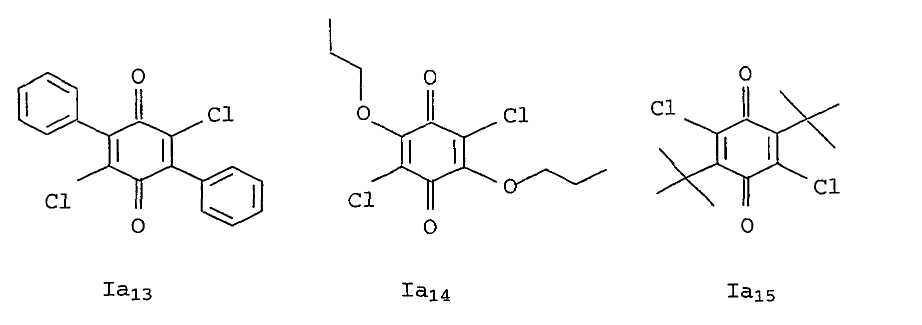

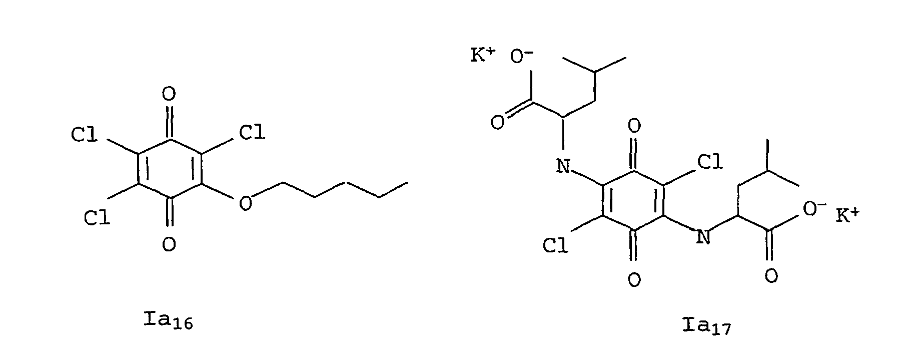

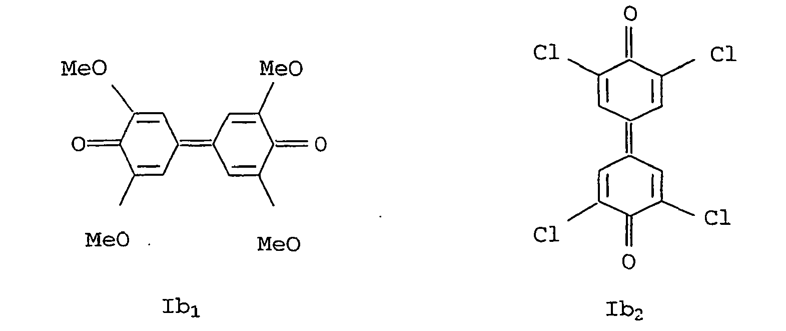

Besonders geeignete Liganden, die aus mehreren miteinander verbrückten Verbindungen der allgemeinen Formel Ia bestehen, sind nachstehend als Formeln Ia_{I} und Ia_{II} abgebildet.

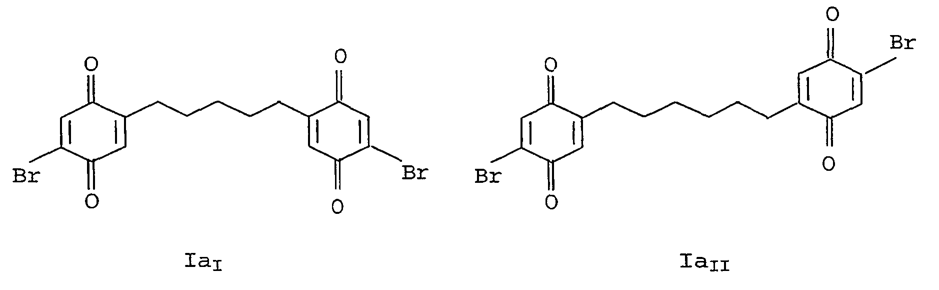

Die Synthese der Liganden der allgemeinen Formeln Ia und Ib ist an sich bekannt. Synthesevorschriften für solche Liganden finden sich u.a. in der DE-A 2923206, der EP-A 046331, der EP-A 046328 und der EP-A 052929.

Die Liganden Ia und Ib können in Gemischen in Verhältnissen von 0 : 100 bis 100 : 0 mol-% eingesetzt werden. Bevorzugte Ausführungsformen sind 0 : 100 mol-%, 10 : 90 mol-%, 50 : 50 mol-%, 90 : 10 mol-% und 100 : 0 mol-%.

Die Liganden der allgemeinen Formel Ia und Ib werden mit einer Phosphinverbindung PR₃' vereinigt, wobei R' Wasserstoff, C₁-C₁₂-Alkylgruppen, C₄-C₁₂-Cycloalkylgruppen, C₇-C₁₅-Aralkylgruppen oder C₆-C₁₅-Arylgruppen bedeutet.

Was dabei Beispiele für besonders bevorzugte Substituenten betrifft, so verweisen wir auf unsere Ausführungen für den Rest R der allgemeinen Formeln Ia und Ib.

Als besonders bevorzugte Phosphinverbindung wird Triphenylphosphin eingesetzt.

Anstelle der Phosphinverbindung PR₃' kann auch die Diphosphinverbindung R₂'P-G-PR₂' verwendet werden, wobei R' die gleiche Bedeutung hat wie bei den Phosphinverbindungen PR₃' und G für C₁-C₁₂-Alkylgruppen, C₄-C₁₂-Cycloalkylgruppen, C₇-C₁₅-Aralkylgruppen oder C₆-C₁₅-Arylgruppen steht.

Derartige Phosphinverbindungen können nach üblichen Synthesen der organischen Chemie hergestellt werden und sind auch im Handel erhältlich.

Die Liganden der allgemeinen Formel Ia bis Ib werden neben der Phosphinverbindung auch mit einer oder mehreren Metallverbindungen der Formel M(L²)₂ oder M(L²)₂(L¹)₂ vereinigt. Dabei sind die Variablen wie folgt definiert:
- L¹: wird gewählt aus Phosphanen der Formel (R⁵)ₓPH₃₋ₓ oder Aminen der Formel (R⁵)ₓNH₃₋ₓ, wobei x eine ganze Zahl zwischen 0 und 3 bedeutet. Aber auch Ether (R⁵)₂O wie Diethylether oder Tetrahydrofuran, H₂O, Alkohole (R⁵)OH wie Methanol oder Ethanol, Pyridin, Pyridinderivate der Formel C₅H₅₋ₓ(R⁵)ₓN, wie beispielsweise 2-Picolin, 3-Picolin, 4-Picolin, 2,3-Lutidin, 2,4-Lutidin, 2,5-Lutidin, 2,6-Lutidin oder 3,5-Lutidin, CO, C₁-C₁₂-Alkylnitrile oder C₆-C₁₄-Arylnitrile sind geeignet, wie Acetonitril, Propionitril, Butyronitril oder Benzonitril. Weiterhin können einfach oder mehrfach ethylenisch unge- sättigte Doppelbindungssysteme als Ligand dienen, wie Ethenyl, Propenyl, cis-2-Butenyl, trans-2-Butenyl, Cyclo- hexenyl oder Norbornanyl.
- R⁵: wird ausgewählt aus Wasserstoff, C₁-C₂₀-Alkylgruppen, die ihrerseits mit O (C₁-C₆-Alkyl) oder N (C₁-C₆-Alkyl)₂-Gruppen substituiert sein können, C₃-C₁₂-Cycloalkylgruppen, C₇-C₁₃-Aralkylresten und C₆-C₁₄-Arylgruppen, wobei spezielle Beispiele dieser Gruppen bei der Definition des Restes R zu finden sind.
- L²: wird ausgewählt aus - Halogenidionen wie Fluorid, Chlorid, Bromid, oder Iodid, bevorzugt sind Chlorid und Bromid, - Amine (R⁵)ₓNH₃₋ₓ, wobei x eine ganze Zahl zwischen 0 und 3 bedeutet und R für C₁-C₁₂-Alkyl steht, - C₁-C₆-Alkylanionen wie Me-, (C₂H₅)-, (C₃H₇)-, (n-C₄H₉)-, (tert.-C₄H₉)- oder (C₆H₁₄); - Allylanionen oder Methallylanionen, - Benzylanionen oder - Arylanionen wie (C₆H₅)-; M ein Übergangsmetall der Gruppen 7 bis 10 des Periodensystems der Elemente; bevorzugt sind Mangan, Eisen, Kobalt, Nickel oder Palladium und besonders bevorzugt Nickel.
- z: ist eine ganze Zahl von 0 bis 4.

In einer besonderen Ausführungsform sind L¹ und L² miteinander durch eine oder mehrere kovalente Bindungen verknüpft. Beispiele für solche Liganden sind 1,5-Cyclooctadienyl-Liganden ("COD"), 1,6-Cyclodecenyl-Liganden oder 1,5,9-all-trans-Cyclododecatrienyl-Liganden.

In einer weiteren besonderen Ausführung ist L¹ Tetramethylethylendiamin.

Ganz besonders bevorzugte Metallverbindungen sind Ni(COD)₂ und Ni(CH₃)₂(TMEDA).

Die Bedingungen zur Umsetzung des oder der Liganden der Formel Ia und Ib mit der Metallverbindung und der Phosphinverbindung sind an sich unkritisch. Gewöhnlich werden sie bei einer Temperatur von 0 bis 100°C in einem Lösemittel umgesetzt, das aus aliphatischen oder aromatischen Kohlenwasserstoffen wie beispielsweise n-Heptan, Toluol, Ethylbenzol, ortho-Xylol, meta-Xylol oder para-Xylol ausgewählt werden kann. Auch Chlorbenzol ist als Lösemittel geeignet, weiterhin Ketone wie beispielsweise Aceton, nichtcyclische oder cyclische Ether wie beispielsweise Diethylether, Diisopropylether, 1,4-Dioxan oder Tetrahydrofuran, Wasser oder Alkohole wie beispielsweise Methanol oder Ethanol. Als Molverhältnis von Metallverbindung zur Phosphinverbindung haben sich Verhältnisse von 1:1000 bis 1000:1 bewährt, bevorzugt sind 1:10 bis 10:1 und besonders bevorzugt 1:2 bis 2:1. Das Molverhältnis des oder der Liganden Ia oder Ib zur Phosphinverbindung beträgt ebenfalls 1:1000 bis 1000:1, bevorzugt 1:10 bis 10:1, insbesondere 1:2 bis 2:1.

Dabei ist es möglich, die Metallverbindung mit dem gewählten organischen Liganden und der Phosphinverbindung außerhalb des Polymerisationsreaktors zur Reaktion zu bringen und die Reaktionslösung dann in den Polymerisationsreaktor zu geben.

Die Umsetzung von Metallverbindung, Phosphinverbindung und Ligand kann auch innerhalb des Polymerisationsreaktors erfolgen, wobei es von Vorteil sein kann, auch bereits andere Stoffe wie beispielsweise weitere Lösungsmittel, zu polymerisierende Monomere und andere Hilfsstoffe wie beispielsweise Aktivatoren oder Emulgatoren zuzusetzen.

Die Wahl der Reaktionsbedingungen hängt dabei jeweils von den eingesetzten Stoffen ab. Besonders bei wasserempfindlichen Vorstufen hat es sich als vorteilhaft erwiesen, die Vorstufen erst außerhalb des Polymerisationsreaktors zur Reaktion zu bringen und dann das Reaktionsprodukt in den Polymerisationsreaktor zu dosieren.

Dieses Vorgehen ist ebenfalls dann vorteilhaft, wenn sich die Vorstufen nicht vollständig im verwendeten Lösungsmittel lösen, wohl aber das Reaktionsprodukt.

Auf eine Isolierung und Reinigung der in situ gebildeten Komplexe wird verzichtet.

Die in situ erzeugten Komplexe eignen sich vorzüglich zum Einsatz bei der Polymerisation oder Copolymerisation von Olefinen in Wasser oder in einem Lösemittelgemisch, das mindestens 50 Vol.-% Wasser enthält. Die Polymerisation wird optional in Gegenwart eines Aktivators und optional in Gegenwart eines Emulgators durchgeführt.

Zusätzlich empfiehlt es sich, noch einen Aktivator zu verwenden, um die Aktivität zu erhöhen. Bei dem Aktivator kann es sich um Olefinkomplexe des Rhodiums oder Nickels handeln.

Bevorzugte, kommerziell bei Aldrich erhältliche Nickel-(Olefin)_{y}-Komplexe sind Ni(C₂H₄)₃, Ni(1,5-Cyclooctadien)₂ "Ni(COD)₂", Ni(1,6-Cyclodecadien)₂, oder Ni(1,5,9-all-trans-Cyclododecatrien)₂. Besonders bevorzugt ist Ni(COD)₂.

Besonders geeignet sind gemischte Ethylen/1,3-Dicarbonylkomplexe des Rhodiums, beispielsweise Rhodium-Acetylacetonat-Ethylen Rh(acac) (CH₂=CH₂)₂, Rhodium-Benzoylacetonat-Ethylen Rh(C₆H₅-CO-CH-CO-CH₃) (CH₂=CH₂)₂ oder Rh(C₆H₅-CO-CH-CO-C₆H₅) (CH₂=CH₂)₂. Am besten geeignet ist Rh(acac)(CH₂=CH₂)₂. Diese Verbindung lässt sich nach der Rezeptur von R. Cramer aus Inorg. Synth. 1974, 15, 14 synthetisieren.

In einigen Fällen gelingt die Aktivierung durch Ethylen. Die Leichtigkeit der Aktivierungsreaktion hängt entscheidend von der Natur des Liganden L¹ ab. So konnte gezeigt werden, dass für den Fall, dass L¹ beispielsweise ein Tetramethylethylendiamin-Ligand ist, kein Aktivator erforderlich ist.

Die Polymerisation der 1-Olefine nach dem erfindungsgemäßen Verfahren kann in an sich bekannter Weise durchgeführt werden.

Dabei ist die Reihenfolge der Zugabe der Reagenzien bei der Polymerisation unkritisch. So kann zunächst gasförmiges Monomer auf das Lösemittel aufgepresst bzw. flüssiges Monomer zudosiert werden, und anschließend wird das Gemisch aus Ligand, Phosphinverbindung und Metallverbindung zugegeben. Man kann aber auch das Gemisch aus Ligand, Phosphinverbindung und Metallverbindung zunächst mit weiterem Lösemittel verdünnen und anschließend Monomer zugeben.

Gleichzeitig wird der Aktivator, sofern er notwendig ist, in einer zweiten Portion desselben Lösemittels oder aber in Aceton gelöst.

Die eigentliche Polymerisation läuft üblicherweise bei einem Mindestdruck von 1 bar, unterhalb dieses Druckes ist die Polymerisationsgeschwindigkeit zu gering. Bevorzugt sind 2 bar und besonders bevorzugt ist ein Mindestdruck von 10 bar.

Als maximaler Druck sind 4000 bar zu nennen; bei höheren Drücken sind die Anforderungen an das Material des Polymerisationsreaktors sehr hoch, und der Prozess wird unwirtschaftlich. Bevorzugt sind 100 bar und besonders bevorzugt sind 50 bar.

Die Polymerisationstemperatur lässt sich in einem weiten Bereich variieren. Als Mindesttemperatur sind 10°C zu nennen, da bei tiefen Temperaturen die Polymerisationsgeschwindigkeit zurückgeht. Bevorzugt ist eine Mindesttemperatur von 40°C und besonders bevorzugt sind 65°C. Als maximale sinnvolle Temperatur sind 350°C zu nennen und bevorzugt 150°C, besonders bevorzugt sind 100°C. Als organische Lösemittel eignen sich aromatische Lösemittel wie Benzol, Toluol, Ethylbenzol, ortho-Xylol, meta-Xylol und para-Xylol sowie Mischungen derselben. Des weiteren eignen sich cyclische Ether wie Tetrahydrofuran und Dioxan oder acyclische Ether wie Diethylether, Di-*n*-butylether, Di-isopropylether oder 1,2-Dimethoxyethan. Auch Ketone wie Aceton, Methylethylketon oder Diisobutylketon sind geeignet, desgleichen Amide wie Dimethylformamid oder Dimethylacetamid. Weiterhin sind Gemische dieser Lösemittel untereinander geeignet sowie Gemische dieser Lösemittel mit Wasser oder Alkoholen wie Methanol oder Ethanol.

Bevorzugt sind Aceton und Wasser sowie Mischungen aus Aceton und Wasser, wobei das Mischungsverhältnis beliebig ist.

Die Menge des Lösemittels ist ebenfalls unkritisch, es muss jedoch gewährleistet sein, dass sich der in situ gebildete Komplex und der Aktivator vollständig lösen können, andernfalls ist mit Aktivitätseinbußen zu rechnen. Der Lösungsvorgang kann gegebenenfalls durch Ultraschallbehandlung beschleunigt werden.

Der ebenfalls zuzugebende Emulgator kann in einer dritten Portion des Lösemittels oder auch zusammen mit dem Liganden oder der Metallverbindung gelöst werden.

Dabei wird die Menge des Emulgators so gewählt, dass das Massenverhältnis zwischen Monomer und Emulgator größer als 1 ist, bevorzugt größer als 10 und besonders bevorzugt größer als 20. Dabei ist es umso günstiger, je weniger Emulgator verwendet werden muss.

Die Liganden der Formel Ia und Ib können für sich als Emulgatoren wirken. Die Aktivität in der Polymerisation wird jedoch deutlich gesteigert, wenn ein zusätzlicher Emulgator zugegeben wird. Dieser Emulgator kann nichtionischer oder ionischer Natur sein.

Gebräuchliche nichtionische Emulgatoren sind z.B. ethoxylierte Mono-, Di- und Tri-Alkylphenole (EO-Grad: 3 bis 50, Alkylrest: C₄-C₁₂) sowie ethoxylierte Fettalkohole (EO-Grad: 3 bis 80; Alkylrest: C₈-C₃₆). Beispiele hierfür sind die Lutensol^{®}-Marken der BASF AG oder die Triton^{®}-Marken der Union Carbide.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂-C₁₈) und ethoxylierter Alkylphenole (EO-Grad: 3 bis 50, Alkylrest: C₄-C₁₂), von Alkylsulfonsäuren (Alkylrest: C₁₂-C₁₈) und von Alkylarylsulfonsäuren (Alkylrest: C₉-C₁₈).

Geeignete kationische Emulgatoren sind in der Regel einen C₆-C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Als Polymerisationsreaktor haben sich gerührte Kessel und Autoklaven sowie Rohrreaktoren als brauchbar erwiesen, wobei die Rohrreaktoren als Schlaufenreaktor ausgeführt werden können.

Das oder die zu polymerisierenden Monomere werden in dem Polymerisationsmedium gemischt. Dabei können als Polymerisationsmedium Wasser oder Gemische von Wasser mit den oben aufgeführten Lösemitteln verwendet werden. Es ist zu beachten, dass der Anteil an Wasser mindestens 50 vol.-% beträgt, bezogen auf die Gesamtmischung, bevorzugt mindestens 90 Vol.-% und besonders bevorzugt mindestens 95 Vol.-%.

Die Lösungen des in situ erzeugten Komplexes, gegebenenfalls des Aktivators und gegebenenfalls des Emulgators werden mit dem Gemisch aus Monomer und wässrigem Polymerisationsmedium vereinigt. Die Reihenfolge der Zugabe der verschiedenen Komponenten ist an sich unkritisch. Es ist jedoch erforderlich, dass die Vereinigung der Komponenten so schnell erfolgt, dass keine Kristallisation von intermediär eventuell auftretenden schwer löslichen Komplexverbindungen erfolgt.

Als Polymerisationsverfahren sind grundsätzlich kontinuierliche und diskontinuierliche Verfahren geeignet. Bevorzugt sind halbkontinuierliche Verfahren (Semi-batch-Verfahren), in denen nach Vermischen aller Komponenten Monomer oder Monomerengemische im Verlauf der Polymerisation nachdosiert werden.

Nach dem erfindungsgemäßen Verfahren werden zunächst wässrige Polymerdispersionen erhalten.

Die mittleren Teilchendurchmesser der Polymerpartikel in den erfindungsgemäß hergestellten Dispersionen betragen zwischen 10 und 1000 nm, bevorzugt zwischen 50 und 500 nm und besonders bevorzugt zwischen 70 und 350 nm. Die Verteilung der Teilchendurchmesser kann, muss aber nicht sehr einheitlich sein. Für manche Anwendungen, insbesondere für solche mit hohen Feststoffanteilen (> 55%), sind breite oder bimodale Verteilungen sogar bevorzugt.

Die erfindungsgemäß hergestellten wässrigen Dispersionen können auch in Form einer Miniemulsion vorliegen, was bedeutet, dass die emulgierten Teilchen einen Teilchendurchmesser von 50 nm bis 150 nm, insbesondere von 70 nm bis 100 nm aufweisen. Zur Herstellung einer solchen Miniemulsion werden die emulgierten Teilchen einer starken Scherung ausgesetzt. Eine solche starke Scherung kann u.a. Hochdruckhomogenisierung, durch Ultraschall oder aber durch Strahldispergatoren erreicht werden. Bevorzugt wird hierbei mit Ultraschall gearbeitet.

Die nach dem erfindungsgemäßen Verfahren erhaltenen Polymere weisen technisch interessante Eigenschaften auf. Im Falle von Polyethylen können sie einen hohen Grad der Kristallinität aufweisen, was beispielsweise durch die Anzahl der Verzweigungen nachgewiesen werden kann. Man findet häufig weniger als 40 Verzweigungen, bevorzugt weniger als 20 Verzweigungen pro 1000 C-Atomen des Polymers und besonders bevorzugt weniger als 10 Verzweigungen, bestimmt durch ¹H-NMR und ¹³C-NMR-Spektroskopie.

Die Molekulargewichtsverteilungen der nach dem erfindungsgemäßen verfahren erhältlichen Polyolefine, d.h. die Q-Werte liegen zwischen 1,0 und 50 und bevorzugt zwischen 1,5 und 10. Die Molmassen der erhaltenen Polyolefine liegen im Bereich von 1000 bis 1000000 insbesondere im Bereich von 100000 bis 3000 (Zahlensmittel).

Vorteilhaft an den erfindungsgemäß hergestellten Dispersionen ist neben dem günstigen Preis aufgrund der billigen Monomeren und Verfahren, dass sie witterungsstabiler als Dispersionen von Polybutadien oder Butadiencopolymeren sind. Gegenüber Dispersionen von Polymeren mit Acrylaten oder Methacrylaten als Hauptmonomer ist die geringere Neigung zum verseifen als vorteilhaft zu nennen. Weiterhin ist von Vorteil, dass die meisten Olefine leichtflüchtig sind und sich nicht polymerisierte Restmonomere leicht entfernen lassen. Schließlich ist von Vorteil, dass während der Polymerisation keine Molmassenregler wie beispielsweise tert.-Dodecylmercaptan zugegeben werden müssen, die einerseits schlecht abgetrennt werden können, andererseits aber unangenehm riechen. Weiterhin ist es günstig, dass die aus dem erfindungsgemäßen Verfahren erhaltenen wässrigen Dispersionen relativ hohe Feststoffgehalte von bis zu 20 % aufweisen.

Aus den zunächst erhaltenen wässrigen Dispersionen lassen sich durch Entfernen des Wassers und gegebenenfalls des oder der organischen Lösemittel die Polymerpartikel als solche erhalten. Zur Entfernung des Wassers und gegebenenfalls des oder der organischen Lösemittel sind zahlreiche gängigen Verfahren geeignet, beispielsweise Filtrieren, Sprühtrocknen oder Verdampfen. Die so erhaltenen Polymere haben eine gute Morphologie und eine hohe Schüttdichte.

Die Teilchengröße lassen sich mit Lichtstreumethoden bestimmen. Einen Überblick findet man in D. Distler (Herausgeber) "Wäßrige Polymerdispersionen", Wiley-VCH Verlag, 1. Auflage, 1999, Kapitel 4.

Die erfindungsgemäß hergestellten Dispersionen lassen sich in zahlreichen Anwendungen vorteilhaft verwenden, wie beispielsweise Papieranwendungen wie Papierstreicherei oder Oberflächenleimung, weiterhin Anstrichen und Lacken, Bauchemikalien, Klebrohstoffe, Formschäume, Textil- und Lederapplikationen, Teppichrückenbeschichtungen, Matratzen oder pharmazeutischen Anwendungen.

Unter Papierstreicherei versteht man das Beschichten der Papieroberfläche mit wässrigen pigmentierten Dispersionen. Dabei sind die erfindungsgemäß hergestellten Dispersionen aufgrund ihres günstigen Preises vorteilhaft. Unter Oberflächenleimung versteht man das pigmentfreie Auftragen von hydrophobierenden Substanzen. Dabei sind gerade die bisher unter wirtschaftlichen Bedingungen nur schwer zugänglichen Polyolefindispersionen als besonders hydrophobe Substanz von Vorteil. Weiterhin ist von Vorteil, dass während der erfindungsgemäßen Herstellung der Dispersionen für Papierstreicherei oder Oberflächenleimung keine Molmassenregler wie beispielsweise tert.-Dodecylmercaptan zugegeben werde müssen, die einerseits schlecht abgetrennt werden können, andererseits aber unangenehm riechen.

In Anstrichen und Lacken sind die erfindungsgemäß hergestellten Dispersionen besonders geeignet, weil sie preislich sehr günstig sind. Besonders vorteilhaft sind wässrige Polyethylendispersionen, weil sie weiterhin auch eine besondere UV-Stabilität aufweisen. Weiterhin sind wässrige Polyethylendispersionen besonders geeignet, weil sie gegenüber basischen Chemikalien, die in der Bauchemie üblich sind, beständig sind.

In Klebstoffen, insbesondere in Klebstoffen für selbstklebende Etiketten oder Folien sowie Pflastern, aber auch in Bauklebstoffen oder Industrieklebstoffen, haben die erfindungsgemäß hergestellten Dispersionen wirtschaftliche Vorteile. Insbesondere in Bauklebstoffen sind sie besonders günstig, weil sie gegenüber basischen Chemikalien, die in der Bauchemie üblich sind, beständig sind.

In Formschäumen, die sich aus den erfindungsgemäß hergestellten Dispersionen durch an sich bekannte Verfahren wie das Dunlop-Verfahren oder das Talalay-Verfahren herstellen lassen, ist wiederum der günstige Preis der erfindungsgemäßen Dispersionen vorteilhaft. Als weitere Komponenten dienen Geliermittel, Seifen, Verdicker und Vulkanisationspasten. Formschäume werden beispielsweise zu Matratzen verarbeitet.

Textil- und Lederapplikationen dienen zur Haltbarmachung und Veredlung von Textil oder Leder. Unter den Effekten sind die Imprägnierung sowie die weitere Ausrüstung der Textilien beispielhaft zu nennen. Vorteilhaft an den erfindungsgemäß hergestellten Dispersionen als Bestandteil in Textil- und Lederapplikationen ist neben dem günstigen Preis die Geruchsfreiheit, da sich Olefine als Restmonomere leicht entfernen lassen.

Teppichrückenbeschichtungen dienen zum Verkleben der Teppichfasern auf dem Rücken, weiterhin haben sie die Aufgabe, dem Teppich die nötige Steifigkeit zu geben sowie Additive wie beispielsweise Flammschutzmittel oder Antistatika gleichmäßig zu verteilen. Vorteilhaft an den erfindungsgemäß hergestellten Dispersionen ist neben dem günstigen Preis die Unempfindlichkeit gegenüber den gängigen Additiven. Insbesondere Polyethylendispersionen haben sich als chemisch besonders inert erwiesen. Schließlich ist von Vorteil, dass während der erfindungsgemäßen Herstellung der Dispersionen für Teppichrückenbeschichtungen keine Molmassenregler wie beispielsweise tert.-Dodecylmercaptan zugegeben werde müssen, die einerseits schlecht abgetrennt werden können, andererseits aber unangenehm riechen.

Unter pharmazeutischen Zubereitungen werden Dispersionen als Träger von Medikamenten verstanden. Dispersionen als Träger von Medikamenten sind an sich bekannt. Vorteilhaft an den erfindungsgemäß hergestellten Dispersionen als Träger von Medikamenten ist der wirtschaftlich günstige Preis und die Beständigkeit gegen Körpereinflüsse wie Magensaft oder Enzyme.

### Arbeitsbeispiele

Allgemeines: Die Synthesen wurden, wenn nicht anders beschrieben, nach der Schlenk-Technik unter Luft- und Feuchtigkeitsausschluss durchgeführt.

Die Bestimmung der Molmassen der erhaltenen Polymeren wurde mittels GPC durchgeführt.

In Anlehnung an DIN 55672 wurden die folgenden Bedingungen gewählt: Lösemittel 1,2,4-Trichlorbenzol, Fluss: 1 ml/min; Temperatur 140 °C. Es wurde an einem Waters 150C-Gerät gemessen, das mit Polyethylen-Standards kalibriert worden war.

Die Ermittlung des Feststoffgehaltes erfolgte durch Ausfällen des Polyethylens mit Methanol.

### Beispiel 1

### (ausgehend von 2,3,5,6-Tetrachloro-p-benzochinon)

64 mg (258 µmol) 2,3,5,6-Tetrachloro-p-benzochinon und 68 mg (258 µmol) Triphenylphosphin wurden in 1 ml Methanol (getrocknet und entgast), 4 ml Toluol (getrocknet und entgast) und 0,3 ml Hexadekan (entgast) gelöst. Die so erhaltene Lösung wurde 20 Minuten gerührt, wobei sie sich orange färbte. Die Lösung wurde dann in einem anderen Schlenck-Kolben gegeben, welcher 79 mg (287 µmol; 1,11 eq) Nickel (cyclooctadien)₂ [Ni(cod)₂] enthielt.

In der Zwischenzeit wurde eine Lösung aus 1 g Natriumdodecylsulfat [SDS] in 95 ml entgastem und entionisiertem Wasser hergestellt. 75 ml dieser wässrigen Lösung wurden direkt in den Reaktor gegeben, die anderen 20 ml wurden zur Katalysatormischung hinzugefügt und einer Ultraschallbehandlung (120 W, 2 Minuten) unterzogen. Die so erhaltene Miniemulsion wurde dann mit Hilfe einer Teflonkanüle in den Reaktor gegeben.

Der Reaktor wurde danach mit Ethylen gefüllt, wobei ein konstanter Ethylendruck von 40 bar eingestellt wurde und gleichzeitig wurde das Reaktorinnere unter Rühren (1000 rpm) auf 70 °C erhitzt. Nach 2 Stunden Reaktionszeit wurde die Polymerisation durch Kühlen und Entspannen des Ethylens abgebrochen.

Der erhaltene wässrige Latex hatte einen Feststoffgehalt von 18 % (ermittelt durch Ausfällen von 7,1 g Polyethylen mit 40 ml Methanol aus dem Latex). Das erhaltene Polyethylen wies eine Molmasse (Zahlensmittel) von 6200 auf, das Gewichtsmittel lag bei etwa 18000.

### Beispiel 2

### (ausgehend von 2,3,5,6-Tetrachloro-p-benzochinon)

64 mg (258 µmol) 2,3,5,6-Tetrachloro-p-benzochinon und 68 mg (258 µmol) Triphenylphosphin wurden in 1 ml Methanol (getrocknet und entgast), 4 ml Toluol (getrocknet und entgast) und 0,3 ml Hexadekan (entgast) gelöst. Die so erhaltene Lösung wurde 20 Minuten gerührt, wobei sie sich orange färbte. Die Lösung wurde dann in einen anderen Schlenck-Kolben gegeben, welcher 79 mg (287 µmol; 1,11 eq) Nickel (cyclooctadien)₂ [Ni(cod)₂] enthielt.

In der Zwischenzeit wurde eine Lösung aus 1 g SDS in 95 ml entgastem und entionisiertem Wasser hergestellt. 75 ml dieser wässrigen Lösung wurden direkt in den Reaktor gegeben, die anderen 20 ml wurden zur Katalysatormischung hinzugefügt und einer Ultraschallbehandlung (120 W, 2 Minuten) unterzogen. Die so erhaltene Miniemulsion wurde dann mit Hilfe einer Teflonkanüle in den Reaktor gegeben.

Der Reaktor wurde danach mit But-1-en gefüllt, wobei ein konstanter But-1-endruck von 10 bar eingestellt wurde und gleichzeitig wurde das Reaktorinnere unter Rühren (1000 rpm) auf 70 °C erhitzt. Nach 30 Minuten wurde das But-1-en durch Ethylen ersetzt, welches unter einem konstanten Druck von 40 bar stand.

Nach 1,5 Stunden weiterer Reaktionszeit wurde die Polymerisation durch Kühlen und Entspannen des Ethylens abgebrochen.

Der erhaltene wässrige Latex wies einen Feststoffgehalt von 8 % auf (ermittelt durch Ausfällen von 13,01 g des Copolymers aus Ethylen und But-1-en mit Methanol aus dem Latex).

### Beispiel 3

### (ausgehend von 2,3,5,6-Tetrabromo-p-benzochinon)

64 mg (258 µmol) 2,3,5,6-Tetrabromo-p-benzochinon und 68 mg (258 µmol) Triphenylphosphin wurden in 1 ml Methanol (getrocknet und entgast), 4 ml Toluol (getrocknet und entgast) und 0,3 ml Hexadekan (entgast) gelöst. Die so erhaltene Lösung wurde 20 Minuten gerührt, wobei sie sich orange färbte. Die Lösung wurde danach in einen anderen Schlenck-Kolben gegeben, welcher 79 mg (267 µmol; 1,11 eq) Ni(cod)₂ enthielt.

In der Zwischenzeit wurde eine Lösung aus 1 g SDS in 95 ml entgastem und entionisiertem Wasser hergestellt. 75 ml dieser wässrigen Lösung wurden direkt in den Reaktor gegeben, die anderen 20 ml wurden der Katalysatormischung hinzugefügt und einer Ultraschallbehandlung (120 W; 2 Minuten) unterzogen. Die so erhaltene Miniemulsion wurde dann mit Hilfe einer Teflonkanüle in den Reaktor gegeben.

Der Reaktor wurde danach mit Ethylen gefüllt, wobei ein konstanter Ethylendruck von 40 bar eingestellt wurde. und gleichzeitig wurde das Reaktorinnere unter Rühren (1000 rpm) auf 40 °C erhitzt. Nach 2 Stunden Reaktionszeit wurde die Polymerisation durch Kühlen und Entspannen des Ethylens abgebrochen.

Die erhaltene wässrige Latex hatte einen Feststoffgehalt von 9 % (ermittelt durch Ausfällen von 3,4 g Polyethylen mit 40 ml Methanol aus dem Latex).

## Patentansprüche

1. Verfahren zur Emulsionspolymerisation von einem oder mehreren Olefinen durch Umsetzung eines Liganden der allgemeinen Formeln Ia oder Ib oder eines Gemisches von mindestens zwei der Liganden Ia oder Ib 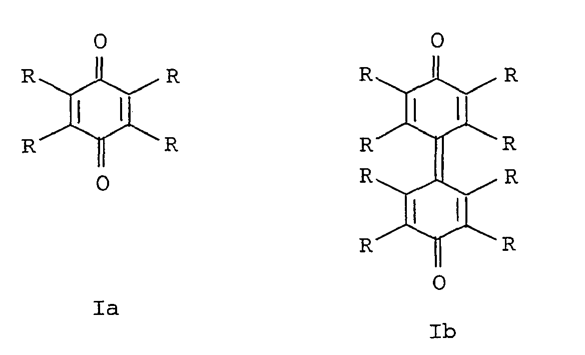 wobei R jeweils einen oder mehrere der nachstehenden Reste bedeuten:
Wasserstoff
Halogen
Nitril
C₁-C₁₂-Alkylgruppen, C₁-C₁₂-Alkoxygruppen, C₇-C₁₃-Aralkylgruppen, C₆-C₁₄-Arylgruppen, unsubstituiert oder substituiert durch: C₁-C₁₂-Alkylgruppen, Halogene, C₁-C₁₂-Alkoxygruppen, C₃-C₁₂-Cycloalkylgruppen, C₁-C₁₂-Thioethergruppen, gegebenenfalls auch in Form ihrer Salze vorliegende Carboxylgruppen oder Sulfongruppen, sowie Aminogruppen mit Wasserstoff und/oder C₁-C₁₂-Alkylresten
Aminogruppen NR¹R², wobei R¹ und R² gemeinsam oder getrennt stehen für Wasserstoff, C₁-C₁₂-Alkylgruppen, C₇-C₁₃-Aralkylreste und C₆-C₁₄-Arylgruppen und zusätzlich auch einen gesättigten oder ungesättigten 5 bis 10-gliedrigen Ring bilden können, unsubstituiert oder substituiert durch: C₁-C₁₂-Alkylgruppen, Halogene, C₁-C₁₂-Alkoxygruppen, C₃-C₁₂-Cycloalkylgruppen, C₁-C₁₂-Thioethergruppen, gegebenenfalls auch in Form ihrer Salze vorliegende Carboxylgruppen oder Sulfongruppen, sowie Aminogruppen mit Wasserstoff und/oder C₁-C₁₂-Alkylresten und wobei gleiche oder verschiedene Verbindungen der allgemeinen Formeln Ia und Ib gegebenenfalls auch durch eine oder mehrere C₁-C₁₂-Alkylenbrücken, C₂-C₁₂ alkylierte Azobrücken oder Brücken der allgemeinen Formel II 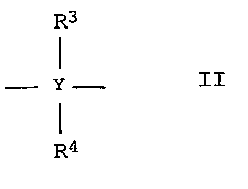
mit Y gleich Silicium oder Germanium und R³, R⁴ gleich Wasserstoff und/oder C₁-C₁₂-Alkyl,
verbrückt sein können,
mit einer Phosphinverbindung PR₃', wobei R' Wasserstoff, C₁-C₁₂-Alkylgruppen, C₄-C₁₂-Cycloalkylgruppen, C₇-C₁₅-Aralkylgruppen oder C₆-C₁₅-Arylgruppen bedeutet
oder mit einer Diphophinverbindung R₂'P-G-PR₂', wobei R' die gleiche Bedeutung hat wie bei den Phosphinverbindungen PR₃' und G für C₁-C₁₂-Alkylgruppen, C₄-C₁₂-Cycloalkylgruppen,
C₇-C₁₅-Aralkylgruppen oder C₆-C₁₅-Arylgruppen steht,
sowie mit einer Metallverbindung der allgemeinen Formel M(L²)₂ oder M(L²)₂(L¹)_{z},
wobei die Variablen wie folgt definiert sind:
M ein Übergangsmetall der Gruppen 7 bis 10 des Perioden- systems der Elemente;
L¹ Phosphane (R⁵)ₓPH₃₋ₓ oder Amine (R⁵)ₓNH₃₋ₓ mit gleichen oder verschiedenen Resten R⁵, Ether (R⁵)₂O, H₂O, Alkoholen (R⁵)OH, Pyridin, Pyridinderivate der Formel C₅H₅₋ₓ(R⁵)ₓN, CO, C₁-C₁₂-Alkylnitrile, C₆-C₁₄-Arylnitrile oder ethylenisch ungesättigten Doppelbindungssystemen, wobei x eine ganze Zahl von 0 bis 3 bedeutet,
R⁵ Wasserstoff, C₁-C₂₀-Alkylgruppen, die ihrerseits mit O(C₁-C₆-Alkyl) oder N(C₁-C₆-Alkyl)₂-Gruppen substituiert sein können, C₃-C₁₂-Cycloalkylgruppen, C₇-C₁₃-Aralkylresten und C₆-C₁₄-Arylgruppen,
L² Halogenidionen R⁶ₓNH₃₋ₓ, wobei x eine ganze Zahl von 0 bis 3 und R⁶ C₁-C₁₂-Alkyl bedeutet, und weiterhin C₁-C₆-Alkylanionen, Allylanionen, Benzylanionen oder Arylanionen, wobei L¹ und L² miteinander durch eine oder mehrere kovalente Bindungen verknüpft sein können,
z eine Zahl von 0 bis 4,
**gekennzeichnet durch** sofortigem Einsatz des Umsetzungsproduktes zur Polymerisarion oder Copolymerisation von Olefinen in Wasser oder in einem Lösemittelgemisch, das mindestens 50 Vol.-% Wasser enthält, in Anwesenheit eines Emulgators und optional in Gegenwart eines Aktivators.

2. Verfahren zu Emulsionspolymerisation gemäß Anspruch 1, **dadurch gekennzeichnet, dass** die Emulsionspolymerisation von einem oder mehreren Olefinen in Form einer Miniemulsion in Wasser erfolgt, wobei die Miniemulsion mit Hilfe einer Ultraschallbehandlung hergestellt wird.

3. Verfahren zur Emulsionspolymerisation gemäß den Ansprüchen 1 oder 2, **dadurch gekennzeichnet, dass** ein Aktivator eingesetzt wird.

4. Verfahren zur Emulsionspolymerisation gemäß den Ansprüchen 1 bis 3, wobei es sich bei dem Aktivator um Olefinkomplexe des Rhodiums oder Nickels handelt.

5. Verfahren zur Emulsionspolymerisation gemäß den Ansprüchen 1 bis 4 in Anwesenheit eines Emulgators auf Basis eines ionischen Emulgators.

6. Verfahren zur Emulsionspolymerisation gemäß den Ansprüchen 1 bis 5, wobei eines der Olefine Ethylen ist.

7. Verfahren zur Emulsionspolymerisation gemäß den Ansprüchen 1 bis 6, wobei das eine Olefin Ethylen ist und das Comonomer ausgewählt wird aus Propylen, 1-Buten, 1-Hexen oder Styrol.

8. Verfahren zur Emulsionspolymerisation gemäß den Ansprüchen 1 bis 7, wobei das zu polymerisierende Olefin Ethylen ist.

## Claims

1. A process for emulsion polymerization of one or more olefins by reacting a ligand of the formula Ia or Ib or a mixture of at least two of the ligands Ia or Ib 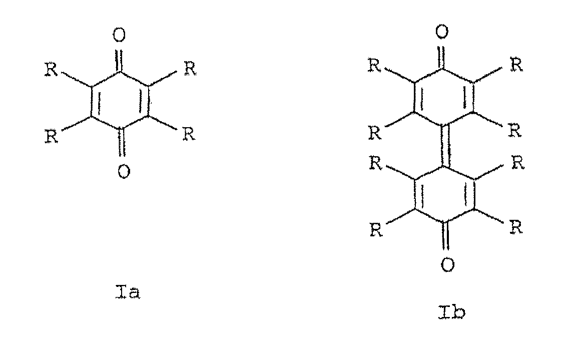 in each of which R denotes one or more of the following radicals:
hydrogen
halogen
nitrile
C₁-C₁₂ alkyl, C₁-C₁₂ alkoxy, C₇-C₁₃ aralkyl, C₆-C₁₄ aryl groups, unsubstituted or substituted by: C₁-C₁₂ alkyl groups, halogens, C₁-C₁₂ alkoxy, C₃-C₁₂ cycloalkyl, C₁-C₁₂ thioether groups, carboxyl groups or sulfo groups present if desired in the form of their salts, and also amino groups with hydrogen and/or C₁-C₁₂ alkyl radicals amino groups NR¹R², where R¹ and R² together or separately are hydrogen, C₁-C₁₂ alkyl, C₇-C₁₃ aralkyl or C₆-C₁₄ aryl groups and may additionally form a saturated or unsaturated 5- to 10-membered ring, unsubstituted or substituted by: C₁-C₁₂ alkyl groups, halogens, C₁-C₁₂ alkoxy, C₃-C₁₂ cycloalkyl, C₁-C₁₂ thioether groups, carboxyl groups or sulfo groups present if desired in the form of their salts, and also amino groups with hydrogen and/or C₁-C₁₂ alkyl radicals and where identical or different compounds of the formulae Ia and Ib may if desired also be bridged by one or more C₁-C₁₂ alkylene, C₂-C₁₂ alkylated azo or formula II bridges 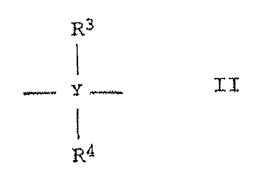
where Y is silicon or germanium and R³ and R⁴ are hydrogen and/or C₁-C₁₂ alkyl,
with a phosphine compound PR'₃, where R' is hydrogen, C₁-C₁₂ alkyl, C₄-C₁₂ cycloalkyl, C₇-C₁₅ aralkyl or C₆-C₁₅ aryl groups,
or with a diphosphine compound R'₂P-G-PR'₂, where R' is as defined for the phosphine compounds PR'₃ and G is C₁-C₁₂ alkyl, C₄-C₁₂ cycloalkyl, C₇-C₁₅ aralkyl or C₆-C₁₅ aryl groups,
and also with a metal compound of the formula M(L²)₂ or M(L²)₂(L¹)_{z},
where the variables are defined as follows:
M is a transition metal from groups 7 to 10 of the Periodic System of the Elements;
L¹ is phosphanes (R⁵)ₓPH₃-ₓ or amines (R⁵)ₓNH₃-ₓ with identical or different radicals R⁵, ethers (R⁵)₂O, H₂O, alcohols (R⁵)OH, pyridine, pyridine derivatives of the formula C₅H₅-ₓ(R⁵)ₓN, CO, C₁- C₁₂ alkyl nitriles, C₆-C₁₄ aryl nitriles or ethylenically unsaturated double bond systems, x being an integer from 0 to 3,
R⁵ is hydrogen, C₁-C₂₀ alkyl groups, which may in turn be substituted by O(C₁-C₆ alkyl) or N(C₁-C₆ alkyl)₂ groups, C₃-C₁₂ cycloalkyl groups, C₇-C₁₃ aralkyl radicals, and C₆-C₁₄ aryl groups,
L² is halide ions, R⁶xNH₃₋ₓ, where x is an integer from 0 to 3 and R⁶ is C₁-C₁₂ alkyl, and also C₁- C₆ alkyl anions, allyl anions, benzyl anions or aryl anions, it being possible for L¹ and L² to be linked to one another by one or more covalent bonds,
z is a number from 0 to 4,
which comprises using the reaction product immediately to polymerize or copolymerize olefins in water or a solvent mixture with a water content of at least 50% by volume in the presence of an emulsifier and, optionally, of an activator.

2. The process according to claim 1, wherein one or more olefins are emulsion polymerized as a miniemulsion in water, produced with the aid of ultrasound.

3. The process according to claim 1 or 2, wherein an activator is used.

4. The process according to any of claims 1 to 3, wherein said activator comprises olefin complexes of rhodium or of nickel.

5. The process according to any of claims 1 to 4, wherein said emulsifier is based on an ionic emulsifier.

6. The process according to any of claims 1 to 5, wherein one of said olefins is ethylene.

7. The process according to any of claims 1 to 6, wherein one olefin is ethylene and the comonomer is selected from propylene, 1-butene, 1-hexene, and styrene.

8. The process according to any of claims 1 to 7, wherein the olefin for polymerization is ethylene.

## Revendications

1. Procédé pour la polymérisation en émulsion d'une ou plusieurs oléfines par mise en réaction d'un ligand de formule générale la ou Ib ou d'un mélange d'au moins deux des ligands la ou Ib 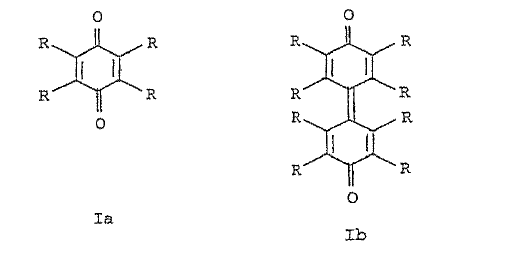 R représentant chaque fois un ou plusieurs des radicaux suivantes :
un atome d'hydrogène
un atome d'halogène
le groupe nitrile
des groupes alkyle en C₁-C₁₂, des groupes alcoxy en C₁-C₁₂, des groupes aralkyle en C₇-C₁₃, des groupes aryle en C₆-C₁₄, non substitués ou substitués par : des groupes alkyle en C₁-C₁₂, des atomes d'halogène, des groupes alcoxy en C₁-C₁₂, des groupes cycloalkyle en C₃-C₁₂, des groupes thioéther en C₁-C₁₂, des groupes carboxy ou des groupes sulfo, éventuellement également présents sous forme de leurs sels, ainsi que des groupes amino à hydrogène et/ou radicaux alkyle en C₁-C₁₂
des groupes amino NR¹R², R¹ et R² représentant ensemble ou séparément un atome d'hydrogène, des groupes alkyle en C₁-C₁₂, des radicaux aralkyle en C₇-C₁₃ et des groupes aryle en C₆-C₁₄ et en outre pouvant également former un cycle à 5-10 chaînons, saturé ou insaturé, non substitué ou substitué par : des groupes alkyle en C₁-C₁₂, des atomes d'halogène, des groupes alcoxy en C₁-C₁₂, des groupes cycloalkyle en C₃-C_{12,} des groupes thioéther en C₁-C₁₂, des groupes carboxy ou des groupes sulfo, éventuellement également présents sous forme de leurs sels, ainsi que des groupes amino à hydrogène et/ou radicaux alkyle en C₁-C₁₂
et des composés de formules générale Ia et Ib identiques ou différents pouvant éventuellement être également pontés par un ou plusieurs ponts alkylène en C₁-C₁₂, ponts azo alkylés en C₂-C₁₂ ou ponts de formule générale II 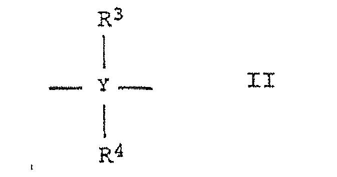
où Y représente un atome de silicium ou de germanium et R³, R⁴ représentent un atome d'hydrogène et/ou un groupe alkyle en C₁-C₁₂,
avec un composé de type phosphine PR₃', R' représentant un atome d'hydrogène, des groupes alkyle en C₁-C₁₂, des groupes cycloalkyle en C₄-C₁₂, des groupes aralkyle en C₇-C₁₅ ou des groupes aryle en C₅-C₁₅
ou avec un composé de type diphosphine R₂'P-G-PR₂', R' ayant la même signification que dans les composés de type phosphine PR₃' et G représentant des groupes alkyle en C₁-C₁₂, des groupes cycloalkyle en C₄-C_{12,} des groupes aralkyle en C₇-C_{I5} ou des groupes aryle en C₆-C₁₅,
ainsi qu'avec un composé métallique de formule générale M(L²)₂ ou M(L²)₂(L¹)_{z},
les variables étant définies comme suit :
M représente un métal de transition des groupes 7 à 10 du système périodique des éléments ;
L¹ représente des phosphanes (R⁵)ₓPH₃₋ₓ ou des amines (R⁵)ₓNH₃₋ₓ à radicaux R⁵ identiques ou différents, des éthers (R⁵)₂O, H₂O, des alcools (R⁵)OH, la pyridine, des dérivés de pyridine de formule C₅H₅₋ₓ(R⁵)ₓN, CO, des alkyl(C₁-C₁₂)nitriles, des aryl(C₆-C₁₄)nitriles ou des systèmes à doubles liaisons à insaturation éthylénique, x représentant un nombre entier valant de 0 à 3,
R⁵ représente un atome d'hydrogène, des groupes alkyle en C₁-C₂₀, qui pour leur part peuvent être substitués par des groupes O-alkyle(C₁-C₆) ou N- [alkyl(C₁-C₆)]₂, des groupes cycloalkyle en C₃-C₁₂, des radicaux aralkyle en C₇-C₁₃ et des groupes aryle en C₆-C₁₄,
L² représente des ions halogénure R⁶ₓNH₃₋ₓ, x représentant un nombre entier valant de 0 à 3 et R⁶ représentant un groupe alkyle en C₁-C₁₂, et en outre des anions alkyle en C₁-C₆, des anions allyle, des anions benzyle ou des anions aryle, L¹ et L² pouvant être reliés l'un à l'autre par une ou plusieurs liaisons covalentes,
z représente un nombre allant de 0 à 4,
**caractérisé par** l'utilisation immédiate du produit de réaction dans la polymérisation ou copolymérisation d'oléfines dans l'eau ou dans un mélange de solvants qui contient au moins 50 % d'eau, en présence d'un émulsifiant et en option en présence d'un activateur.

2. Procédé pour la polymérisation en émulsion selon la revendication 1, **caractérisé en ce que** la polymérisation en émulsion d'une ou plusieurs oléfines s'effectue sous forme d'une mini-émulsion dans l'eau, la mini-émulsion étant préparée à l'aide d'un traitement par ultrasons.

3. Procédé pour la polymérisation en émulsion selon la revendication 1 ou 2, **caractérisé en ce qu'**on utilise un activateur.

4. Procédé pour la polymérisation en émulsion selon les revendications 1 à 3, dans lequel l'activateur consiste en complexes d'oléfine du rhodium ou du nickel.

5. Procédé pour la polymérisation en émulsion selon les revendications 1 à 4, en présence d'un émulsifiant à base d'un émulsifiant ionique.

6. Procédé pour la polymérisation en émulsion selon les revendications 1 à 5, dans lequel l'une des oléfines est l'éthylène.

7. Procédé pour la polymérisation en émulsion selon les revendications 1 à 6, dans lequel ladite une oléfine est l'éthylène et le comonomère est choisi parmi le propylène, le 1-butène, le 1-hexène ou le styrène.

8. Procédé pour la polymérisation en émulsion selon les revendications 1 à 7, l'oléfine à polymériser étant l'éthylène.
